# EUROPÄISCHE PATENTSCHRIFT

(11) **EP 0 631 894 B1**
(45) Veröffentlichungstag und Bekanntmachung des Hinweises auf die Patenterteilung: **09.09.1998**
(21) Anmeldenummer: 94108674.6
(22) Anmeldetag: 07.06.1994
(51) Int. Cl.: B60K 15/03

(54) **Explosions- und Brandschutz für Kraftstoffbehälter von Fahrzeugen**
Explosion- and fire protection for fuel tanks of vehicles
Protection contre des explosions et des incendies pour réservoirs d'essence de véhicules

(30) Priorität: 30.06.1993 DE 4321662
(43) Veröffentlichungstag der Anmeldung: 04.01.1995
(73) Patentinhaber: Krauss-Maffei Aktiengesellschaft, 80997 München (DE)
(72) Erfinder: Battermann, Bernd, D-85247 Schwabhausen (DE); Schulze, Heinz, D-82178 Puchheim (DE); Wolf, Friedrich, D-82239 Alling (DE)

(56) Entgegenhaltungen:
- EP-A- 0 256 239
- WO-A-89/02397

## Beschreibung

Die Erfindung betrifft einen explosions- und brandgeschützten für Kraftstoffbehälter von Fahrzeugen von der im Oberbegriff des Anspruchs 1 angegebenen Art.

Explosions- und Brandschutzvorrichtungen dieser Art basieren auf dem seit über 100 Jahren aus dem Bergwerkswesen bekannten Prinzip der Davy'schen Sicherheitslampe. In der Anwendung dieses Prinzips bei Kraftstoffbehältern, wird der Behälterinnnenraum mit mechanisch weitgehend stabilen Netzwerkblöcken vollständig ausgefüllt. Hierzu ist es bekannt, Metallbehälter vollständig mit den Netzwerkblöcken auszufüttern und anschließend den Metallbehälter zuzuschweißen. Sei Kraftfahrzeugen mit schwer zugänglichen Hohlräumen jedoch, wie dies insbesondere bei gepanzerten Kampffahrzeugen der Fall ist, werden Kraftstoffbehälter in Form von Tankblasen mit flexiblen Behälterwänden verwendet, mit denen sich die schwer zugänglichen Hohlräume noch besser ausnutzen lassen. Die rauhe Struktur der Netzwerkblöcke birgt jedoch die Gefahr in sich, daß diese die flexiblen Behälterinnenwände bei den starken Vibrationsbelastungen im Fahrbetrieb beschädigen. Im weiteren besteht die Gefahr, daß sich bei der Gegeneinanderbewegung von nebeneinander liegenden Netzwerkblöcken Abrieb ergibt, durch den sich Verstopfungen im Kraftstoffleitungssystem einstellen können. Starker Abrieb oder teilweises Deformieren der Netzwerkblöcke können auch dazu führen, daß diese den Kraftstoffbehälter nicht mehr vollständig ausfüllen, wodurch die Schutzwirkung beeinträchtigt werden kann.

Das Netzwerk in der gebräuchlichsten Form, wie es z.B. in der DE 38 16 792 C2 beschrieben ist, wird dabei in der Weise gebildet, daß eine dünne Metallfolie als Streckmaterial zu einem dünnen und feinmaschigen Gitterwerk auseinandergezogen und dann zur Form von Netzwerkblöcken zusammengelegt wird.

Der Erfindung liegt die Aufgabe zugrunde, eine Expolsions- und Brandschutzvorrichtung der genannten Art so auszubilden, daß das den Innenraum des Kraftstoffbehälters ausfüllende Netzwerk die flexiblen Behälterwände nicht beschädigt und die Gefahr der Verstopfung des Kraftstoffleitungssystems ausgeschlossen ist.

Die erfindungsgemäße Lösung der Aufgabe ist im Anspruch 1 angegeben. Die Unteransprüche beziehen sich auf weitere vorteilhafte Ausgestaltungen der Erfindung.

Bei Fahrzeugen, bei denen nur schwer zugängliche Hohlräume für die Unterbringung von Kraftstoff genutzt werden können, wie dies insbesondere bei gepanzerten Kampffahrzeugen der Fall ist, wird in den Hohlraum zunächst ein flexibler Kraftstoffbehälter eingeführt, der vorher der Form des Hohlraumes entsprechend hergestellt wurde. Der eingeführte Kraftstoffbehälter wird mit Netzwerkblöcken befüllt. Diese entsprechen in Form und Größe der im Kraftstoffbehälter hierfür vorgesehenen Füllöffnung. Dabei können alle denkbaren geometrischen Formen vorkommen, abhängig von der Form des Behälterinnenraums.

Durch die Ummantelung der Netzwerkblöcke mit einem gleitfähigen Überzug ist sichergestellt, daß die rauhe Struktur der Netzwerkblöcke bei den im Fahrbetrieb herrschenden Vibrationen die flexiblen Behälterwände nicht beschädigen und bei der Gegeneinanderbewegung der einzelnen Netzwerkblöcke keinen Abrieb erzeugen kann. In einer bevorzugten Ausführungsform der Erfindung besteht der Überzug aus einem feinmaschigem Siebgewebe, durch das möglicherweise dennoch von einem Netzwerkblock abgelöste Abriebbestandteile sicher zurückgehalten werden können und nicht in das Kraftstoffzuleitungssystem gelangen können.

Die erfindungsgemäße Explosions- und Brandschutzvorrichtung findet vorzugweise Anwendung in Kampffahrzeugen, doch ist diese Vorrichtung auch besonders für Flugzeuge geeignet, bei denen ebenfalls Hohlräume mit komplizierter Formgebung ausgenützt werden müssen und bei denen ebenfalls besondere Maßnahmen für einen zuverlässig wirkenden Explosions- und Brandschutz zu treffen sind, wobei sichergestellt sein muß, daß keine Verstopfungsgefahr des Kraftstoffsystems durch Abriebbestandteile entstehen kann.

## Patentansprüche

1. Explosions- und brandgeschützter Kraftstoffbehälter von Fahrzeugen, bestehend aus flexiblen, einem Hohlraum im Fahrzeug formangepaßten Behälter und einer den Behälterinnenraum ausfüllenden Netzwerkstruktur aus mit Unterbrechungen versehener Metallfolie oder Metallfasern, wobei die Netzwerkstruktur aus aus einem oder mehreren Netzwerkblöcken besteht, **dadurch gekennzeichnet,** daß die jeweils an den Außenflächen mit einem glattflächigen und gleitfähigen Überzug versehen sind, wobei der Überzug soweit mit Durchbrechungen versehen ist, daß der Kraftstoffluß zwischen benachbarten Netzwerkblöcken nicht behindert ist.

2. Explosions- und brandgeschützter Kraftstoffbehälter nach Ansprüch 1, **dadurch gekennzeichnet**, daß der Überzug aus einem Gewebe besteht.

3. Explosions- und brandgeschützter Kraftstoffbehälter nach Anspruch 1 oder 2, **dadurch gekennzeichnet**, daß der Überzug aus Metall besteht.

4. Explosions- und brandgeschützter Kraftstoffbehälter nach Anspruch 1 oder 2, **dadurch gekennzeichnet**, daß der Überzug aus Kunststoff besteht.

5. Explosions- und brandgeschützter Kraftstoffbehälter nach einem der Ansprüche 2 bis 4, **dadurch gekennzeichnet**, daß das Gewebe ein feinmaschiges Filtergewebe ist.

6. Explosions- und brandgeschützter Kraftstoffbehälter nach einem der Ansprüche 1 bis 5, **dadurch gekennzeichnet**, daß bei einem Netzwerkblock mit strangartiger Form der Überzug schlauchartig gestaltet ist.

## Claims

1. Explosion- and fire-proof fuel container for vehicles, comprising a flexible container adapted in shape to a cavity in the vehicle and a mesh structure filling out the container interior made of metal foil or metal fibres provided with breaks, whereby the mesh structure comprises one or more mesh blocks, characterised in that said mesh blocks are respectively provided with a smooth-surfaced sliding covering on the external surfaces, whereby the covering is provided with perforations such that the flow of fuel between adjacent mesh blocks is not hindered.

2. Explosion- and fire-proof fuel container according to Claim 1, characterised in that the covering is made of a woven fabric.

3. Explosion- and fire-proof fuel container according to Claim 1 or 2, characterised in that the covering is made of metal.

4. Explosion- and fire-proof fuel container according to Claim 1 or 2, characterised in that the covering is made of plastic.

5. Explosion- and fire-proof fuel container according to one of Claims 1 to 4, characterised in that the woven fabric is a fine-mesh filter fabric.

6. Explosion- and fire-proof fuel container according to one of Claims 1 to 5, characterised in that in the case of a mesh block of a strand-like form, the covering has a hose-type construction.

## Revendications

1. Réservoir de carburant pour véhicules protégé contre les explosions et contre le feu comprenant un réservoir flexible s'adaptant à la forme d'une cavité du véhicule et une structure réticulée remplissant l'intérieur du reservoir et consistant en feuille métallique avec des interruptions ou en fibres métalliques, la structure réticulée étant constituée par un ou plusieurs blocs réticulés, caractérisé en ce que ces derniers comportent, aux parois externes, un revêtement lisse et glissant, le revêtement présentant des interruptions d'une largeur telle que le flux de carburant entre des blocs réticulés voisins ne soit pas entravé.

2. Réservoir de carburant protégé contre les explosions et contre le feu selon la revendication 1, caractérisé en ce que le revêtement est constitué par un tissu.

3. Réservoir de carburant protégé contre les explosions et contre le feu selon la revendication 1 ou 2, caractérisé en ce que le revêtement est constitué par un métal.

4. Réservoir de carburant protégé contre les explosions et contre le feu selon la revendiation 1 ou 2, caractérisé en ce que le revêtement est constitué par une matière synthétique.

5. Réservoir de carburant protégé contre les explosions et contre le feu selon l'une des revendications 2 à 4, caractérisé en ce que le tissu est un tissu filtrant à mailles fines.

6. Réservoir de carburant protégé contre les explosions et contre le feu selon l'une des revendications 1 à 5, caractérisé en ce que le revêtement est formé à la manière d'un tuyau dans le cas d'un bloc réticulé allongé.
